# EUROPEAN PATENT APPLICATION

(11) **EP 1 247 634 A2**
(43) Date of publication of application: **09.10.2002**
(21) Application number: 02007622.0
(22) Date of filing: 04.04.2002
(51) Int. Cl.: B29C 45/68, B29C 45/17

(54) **Mould carrier with toggle opening for moulding eva**

(30) Priority: 06.04.2001 IT PD010087
(71) Applicant: Ottogalli Businaro srl, 35020 Albignasego(PD) (IT)
(72) Inventor: Graziano, Fabbian, 35020 Albignasego (Padova) (IT); Bonta', Damiano, 35020 Albignasego (Padova) (IT); Novo, Roberto, 35020 Albignasego (Padova) (IT); Roveroni, Luigi, 35020 Albignasego (Padova) (IT)
(74) Representative: Gustorf, Gerhard, Dipl.-Ing.

(57) **Abstract**

The invention is a new mould carrier for moulding EVA technical items, comprising a base (B) that carries the lower half-moulds (Si), guide columns (C), an upper crosspiece (T) and a plane (P) that carries the upper half-moulds (Ss) and slides on the guide columns (C). The mould carrier is provided with two pairs of connecting elements (Lb1,Lb2) hinged to each other and also to the upper crosspiece (T) and the sliding plane (P); the total length of the first pair of connecting elements (Lb1) is equal to the distance between the upper crosspiece (T) and the sliding plane (P) with closed moulds, while the total length of the second pair of connecting elements (Lb2) is suitably longer than the distance between the upper crosspiece (T) and the sliding plane (P) and consequently said second pair of connecting elements (Lb2) is always positioned angularly with respect to the first pair of connecting elements (Lb1). A piston (Lp) hinged to the common hinge point of the second pair of connecting elements (Lb2) acts on the common hinge point of the first pair of connecting elements (Lb1) to obtain the translation of the sliding plane (P).

## Description

The invention concerns the systems for moulding EVA technical items and in particular it concerns a new mould carrier with toggle opening.

The manufacture of objects through a moulding process requires the use of moulds comprising two parts that can be opened in order to allow the manufactured object to be extracted from the mould.

Some materials, like for example EVA, when injected into the mould undergo an expansive reticulation phase and it is necessary to open the two parts of the mould very quickly, in order to avoid infiltrations and burrs.

The mould carriers used at present do not ensure a sufficiently rapid opening of the two half-moulds.

For the moulding of paired or symmetrical objects two moulds are used simultaneously in the same moulding system, in such a way as to obtain the continuous production of each part together with the symmetrical or paired part.

Each one of the four parts of the two moulds must be installed in the system with extreme precision, in order to prevent any difference in size between the two objects manufactured and also to avoid leakages or burrs.

Even if the four parts are installed with precision in the system, the continuous use causes vertical shifts that move the two parts of one of the two moulds near to or far away from each other, making it necessary to interrupt production to carry out new adjustments of the position of the moulds themselves.

The object of this patent is a new mould carrier for moulding plastic materials, having the mould opening with toggle linkage and provided with a system for the automatic vertical adjustment of each fixed part of the half-moulds.

The new mould carrier comprises a base that carries the lower half-moulds, guide columns, an upper crosspiece and a plane that carries the upper half-moulds and slides on the guide columns. It is provided with two pairs of connecting elements hinged to each other and to the upper crosspiece and the sliding plane, the total length of the first pair of connecting elements being equal to the distance between the upper crosspiece and the sliding plane and the total length of the second pair of connecting elements being suitably longer than the distance between the upper crosspiece and the sliding element and consequently said second pair of connecting elements being always positioned angularly with respect to the first pair of connecting elements; a piston hinged to the common hinge point of the second pair of connecting elements acts on the common hinge point of the first pair of connecting elements.

The main aim of the new mould carrier is to obtain the rapid opening of the half-moulds.

Another aim of the new mould carrier is to achieve the automatic adjustment of the vertical position of each one of the fixed half-moulds, in such a way as to ensure the adherence between each pair of half-moulds.

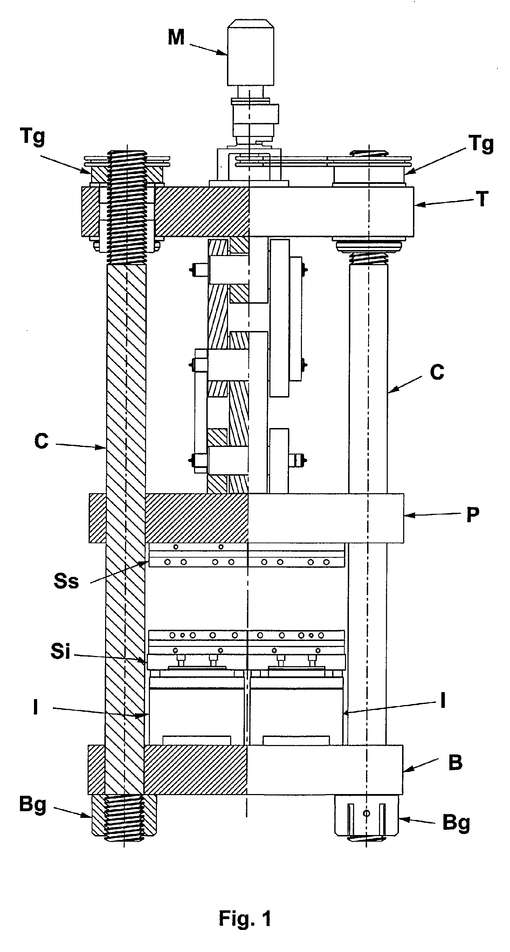

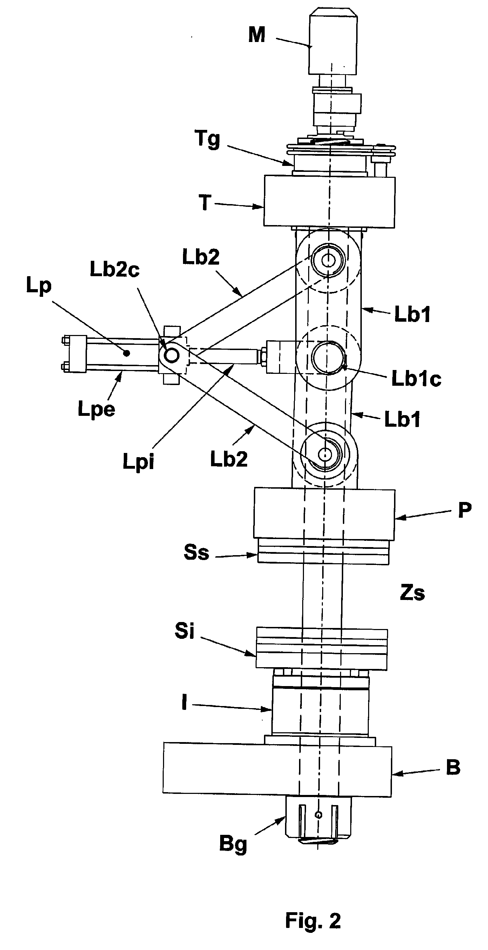

The following is just an example among many of a practical implementation of the new mould carrier, shown in its front and side views, that is, Figure 1 and Figure 2, respectively. In particular, the left part of Figure 1 shows a vertical section of the new mould carrier.

The new mould carrier comprises a base (B), two or more guide columns (C), an upper crosspiece (T), a sliding plane (P) that carries the upper half-moulds (Ss), hydraulic cylinders (I) that carry the lower half-moulds (Si), a toggle linkage (L) with system operating piston (Lp) between upper crosspiece (T) and sliding plane (P), an electric motor (M).

The guide columns (C) are parallel to each other, have threaded ends and are joined to the base (B) and the upper crosspiece (T) through adjusting metal rings (Bg, Tg). In particular, the metal rings (Tg) of the upper crosspiece (T) are connected to the electric motor (M) fixed to the upper crosspiece (T) by means of a belt, chain or similar element. The operation of said motor (M) and the consequent rotation of the metal rings (Tg) of the upper crosspiece (T) make it possible to adjust the distance between the upper crosspiece (T) itself and the base (B), to adapt the new mould carrier to moulds having different thickness.

On the base (B) there are the hydraulic cylinders (I) that carry the lower half-moulds (Si). These hydraulic cylinders (I), with vertical excursion, support on their upper part the lower half-moulds (Si).

The two hydraulic cylinders (I) are connected to each other, directly or by means of valves, in such a way as to exert the same pressure on the lower half-moulds (Si).

The sliding plane (P) that carries the upper half-moulds (Ss) is an horizontal plane inserted in the guide columns (C) and sliding on them. On the lower side of said sliding plane (P) the upper half-moulds (Ss) are applied, so that they are vertically aligned with the lower half-moulds (Si).

The toggle linkage (L) comprising two pairs of connecting elements (Lb1, Lb2) is applied between the upper crosspiece (T) and the sliding plane (P).

Both pairs of connecting elements (Lb1, Lb2) are hinged to each other and to the upper crosspiece (T) and the sliding plane (P).

The first pair of connecting elements (Lb1), that is, the main one with greater dimensions, has total length equal to the distance between the upper crosspiece (T) and the sliding plane (P) and constitutes the linkage owing to which the upper half-moulds (Ss) of the sliding plane (P) exert pressure on the lower half-moulds (Si) of the hydraulic cylinders.

The second pair of connecting elements (Lb2), that is, the secondary one with smaller dimensions, has total length exceeding the distance between the upper crosspiece (T) and the sliding plane (P) and consequently is always positioned angularly with respect to the first pair of connecting elements (Lb1).

The outer cylinder (Lpe) of the system operating piston (Lp) is hinged to the common hinge point (Lb2c) of the two secondary connecting elements (Lb2), while the sliding inner cylinder (Lpi) of the same piston (Lp) is hinged to the common hinge point (Lb1c) of the main connecting elements (Lb1).

In particular, when the sliding inner cylinder (Lpi) of the piston (Lp) is extended the two main connecting elements (L1) are extended and aligned vertically, while when the sliding inner cylinder (Lpi) of the piston (Lp) is retracted the two main connecting elements (L1) generically form a right angle.

In other words, the excursion of the sliding inner cylinder (Lpi), through the action of the toggle linkage (L) of the two pairs of connecting elements (Lb1, Lb2), causes the lowering and lifting of the sliding plane (P) and consequently the closing of the upper half-moulds (Ss) onto the lower half-moulds (Si).

The linkage (L) described above ensures a wide and rapid excursion of the sliding plane (P) with a simple piston (Lp).

When the sliding plane (P) is lowered and the upper half-moulds (Ss) are closed onto the lower half-moulds (Si), any difference in height between the upper or lower half-moulds (Ss, Si) is compensated for by the hydraulic cylinders (I) that adapt the vertical position of the lower half-moulds (Si), so that both are in perfect contact with the corresponding upper half-moulds (Ss). Furthermore, the hydraulic cylinders (I) ensure uniform pressure on both the lower half-moulds (Si), in such a way as to prevent any unbalance.

The space required for the specific mould is indicated by (Zs).

Therefore, with reference to the above description and the enclosed drawings, the following claims are put forth.

## Claims

1. Mould carrier for moulding EVA technical items, comprising a base (B) that carries the lower half-moulds, guide columns (C), an upper crosspiece (T) and a plane (Ss) that carries the upper half-moulds and slides on the guide columns (C), **characterized in that** it is provided with two pairs of connecting elements (Lb1, Lb2) hinged to each other and also to the upper crosspiece (T) and the sliding plane (P), and wherein the total length of the first pair of connecting elements (Lb1) is equal to the distance between the upper crosspiece (T) and the sliding plane (P) with closed moulds and constitutes the linkage thanks to which the upper half-moulds (Ss) of the sliding plane (P) exert pressure onto the lower half-moulds (Si), and wherein the total length of the second pair of connecting elements (Lb2) is suitably longer than the distance between the upper crosspiece (T) and the sliding plane (P) and consequently said second pair of connecting elements is always positioned angularly with respect to the first pair of connecting elements (Lb1), and wherein a piston (Lp) hinged to the common hinge point of the second pair of connecting elements (Lb2) acts on the common hinge point of the first pair of connecting elements (Lb1) to obtain the translation of the sliding plane (P).

2. Mould carrier for moulding EVA technical items according to claim 1, **characterized in that** the lower half-moulds (Si) are installed on the base with interposed hydraulic cylinders (I) connected to each other directly or by means of valves.

3. Mould carrier for moulding EVA technical items according to claim 1, **characterized in that** the guide columns (C) are threaded at the ends and are joined to the base and the upper crosspiece by means of metal rings (Tg), and wherein the metal rings on the upper ends of the guide columns are rotated by an electric motor (M), in such a way as to adapt the height of the sliding plane (P) according to the thickness of the moulds.
